(19) Europäisches Patentamt / European Patent Office / Office européen des brevets

(11) **EP 3 595 166 A1**

(12) **EUROPEAN PATENT APPLICATION**

(43) Date of publication:
**15.01.2020 Bulletin 2020/03**

(51) Int Cl.:
**H02P 9/30** (2006.01)  **H02P 9/10** (2006.01)
**H02P 29/024** (2016.01)

(21) Application number: **18182812.0**

(22) Date of filing: **11.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• PATHMANATHAN, Mehanathan
  **722 15 Västerås (SE)**
• RODRIGUEZ, Pedro
  **722 25 Västerås (SE)**
• LIN, Chenjie
  **Fuquay Varina, NC 27526 (US)**
• SHRESTHA, Ghanshyam
  **Cary, NC 27513 (US)**
• JANHUNEN, Tuomas
  **01610 Vantaa (FI)**
• PALOHEIMO, Pasi
  **01620 Vantaa (FI)**

(74) Representative: **Kransell & Wennborg KB**
**P.O. Box 27834**
**115 93 Stockholm (SE)**

(54) **METHOD OF PERFORMING FAST DE-EXCITATION OF A BRUSHLESS SYNCHRONOUS MACHINE**

(57) A method of performing de-excitation of a brushless synchronous machine (1) comprising a stator (2); and a rotor (5) including: a field winding (7), an exciter armature (13), a rectifier (15) comprising thyristors (T1-T6), the rectifier (15) having input terminals (15a-15c) connected to the exciter armature (13) and output terminals (15d-15e) connected to the field winding (7), a field discharge resistor (R) connected in series with the field winding (7), and a bypass switch (Q1) connected in parallel with the field discharge resistor (R), the bypass switch (Q1) being operable between a closed state in which the field discharge resistor (R) is bypassed, and an open state, wherein the method comprises: a) controlling the thyristors (T1-T6) to fire only during a negative half-cycle of the armature voltage waveforms, and b) controlling the bypass switch (Q1) to obtain the open state from the closed state to thereby discharge a field winding current through the field discharge resistor (R).

Fig. 1

## Description

## TECHNICAL FIELD

The present disclosure generally relates to synchronous machines and in particular to brushless synchronous machines.

## BACKGROUND

Synchronous machine excitation systems are designed to supply the required field winding current to the rotor winding or field winding of a synchronous machine. Excitation is usually done through carbon brushes (static excitation) or using an exciter machine with a rotating diode or thyristor rectifier (brushless excitation).

A means to quickly discharge the field of an electrically excited synchronous machine is important as it enables a fast rotor flux reduction. This is imperative in cases where an electrical fault such as a stator short circuit occurs, as a fast de-excitation system will limit the damages.

One example of a de-excitation system is disclosed in US4152636. A brushless exciter is disclosed where thyristors are substituted for conventional diodes in the rotating rectifier assembly in a synchronous dynamoelectric machine. The gates of the thyristors are fired only at a low voltage point of the negative half cycle of the poly-phase armature voltage waveforms for fast de-excitation.

Another type of de-excitation is disclosed in C.A. Platero, M. Redondo, F. Blazquez, P. Frias, "High-speed de-excitation system for brushless synchronous machines", IET Electric Power Applications, 2012, Vol. 6, Iss. 3, pp. 156-161. This article discloses the use of a discharge resistor which is introduced in series with the field winding of a brushless excitation system during a fault.

A critical factor in the design of the field discharge system is the sizing of the discharge resistor, in particular in a rotating excitation system. The resistor must dissipate the stored magnetic energy of the field winding, and as a result will be physically large.

## SUMMARY

In view of the above, an object of the present disclosure is to provide a method of performing de-excitation of a brushless synchronous machine which solves, or at least mitigates, the problems of the prior art.

There is hence according to a first aspect of the present disclosure provided a method of performing de-excitation of a brushless synchronous machine comprising a stator; and a rotor including: a field winding, an exciter armature, a rectifier comprising thyristors, the rectifier having input terminals connected to the exciter armature and output terminals connected to the field winding, a field discharge resistor connected in series with the field winding, and a bypass switch connected in parallel with the field discharge resistor, the bypass switch being operable between a closed state in which the field discharge resistor is bypassed, and an open state, wherein the method comprises: a) controlling the thyristors to fire only during a negative half-cycle of the armature voltage waveforms, and b) controlling the bypass switch to obtain the open state from the closed state to thereby discharge a field winding current through the field discharge resistor.

Due to using the specific firing angle $\alpha$ to de-excite the field winding, the exciter machine temporarily acts as a motor which consumes the energy of the field winding and transforms it into a positive torque. This can be understood by observing the equation of power factor (PF) in a thyristor rectifier:

$$PF = \frac{3}{\pi}\cos\alpha$$

Thus if $\alpha > 90°$, which is the case if a negative field voltage is desired, the power factor is negative and real power is negative, meaning that power is transferred from the field winding to the exciter armature.

During the de-excitation process some of the field winding energy is dissipated in by the exciter armature, as explained above. The energy dissipated in the field discharge resistor is therefore lower for the present method compared to the solution in the article "High-speed de-excitation system for brushless synchronous machines". According to the system disclosed in that article, all the field winding energy is completely dissipated in the field discharge resistor. Lower energy dissipation in the field discharge resistor means that a physically smaller field discharge resistor can be used.

In view of the above, the problem to be solved is to reduce the size of the field discharge resistor. There is no motivation or incentive in US4152636 to solve this problem.

Additionally, surprisingly, the present method provides considerably faster de-excitation than using only one of a field discharge resistor and firing of the thyristors during the negative half-cycle.

According to one embodiment step b) is performed simultaneously with step a).

According to one embodiment in step a) the thyristors are fired with a firing angle $\alpha$ in the range $90° < \alpha < 270°$.

One embodiment comprises determining whether a fault condition is present in the brushless synchronous machine, and in case the presence of a fault condition is determined, performing steps a) and b).

According to one embodiment the fault condition is a stator short circuit fault.

One embodiment comprises controlling the bypass switch to maintain the closed state, to bypass the field discharge resistor, and controlling the thyristors to fire only during a positive half-cycle of the armature voltage waveforms as long as no fault condition is present in the brushless synchronous machine.

According to one embodiment the bypass switch is an insulated gate bipolar transistor (IGBT).

According to one embodiment the rectifier is a thyristor bridge rectifier.

There is according to a second aspect of the present disclosure provided a computer program comprising computer code which when executed by processing circuitry for a control system of a brushless synchronous machine causes the control system to perform the steps of the method according to the first aspect.

There is according to a third aspect of the present disclosure provided a brushless synchronous machine comprising: a stator, a rotor comprising: a field winding, an exciter armature, a rectifier comprising thyristors, the rectifier having input terminals connected to the exciter armature and output terminals connected to the field winding, a field discharge resistor connected in series with the field winding, and a bypass switch connected in parallel with the field discharge resistor; and a control system configured to perform the method according to the first aspect.

One embodiment comprises a gate control unit, wherein the control system is configured to control the gate control unit to thereby control the firing of the thyristors.

One embodiment comprises an exciter stator, wherein the exciter stator is a permanent magnet stator. This configuration would for example not be possible in the system disclosed in "High-speed de-excitation system for brushless synchronous machines" because it depends on control of the exciter stator magnetization to open the IGBT across the discharge resistor.

The exciter stator is configured to electromagnetically interact with the exciter armature.

According to one embodiment the brushless synchronous machine is a generator. The brushless synchronous machine could alternatively be a motor.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

**BRIEF DESCRIPTION OF THE DRAWINGS**

The specific embodiments of the inventive concept will now be described, by way of example, with reference to the accompanying drawings, in which:

Fig. 1 shows schematically shows a brushless synchronous machine;

Fig. 2 is a flowchart of a method of performing de-excitation of a brushless synchronous machine;

Fig. 3 shows the energy dissipated in a field discharge resistor for different types of de-excitation processes; and

Fig. 4 shows de-excitation curves for different types of de-excitation processes.

**DETAILED DESCRIPTION**

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

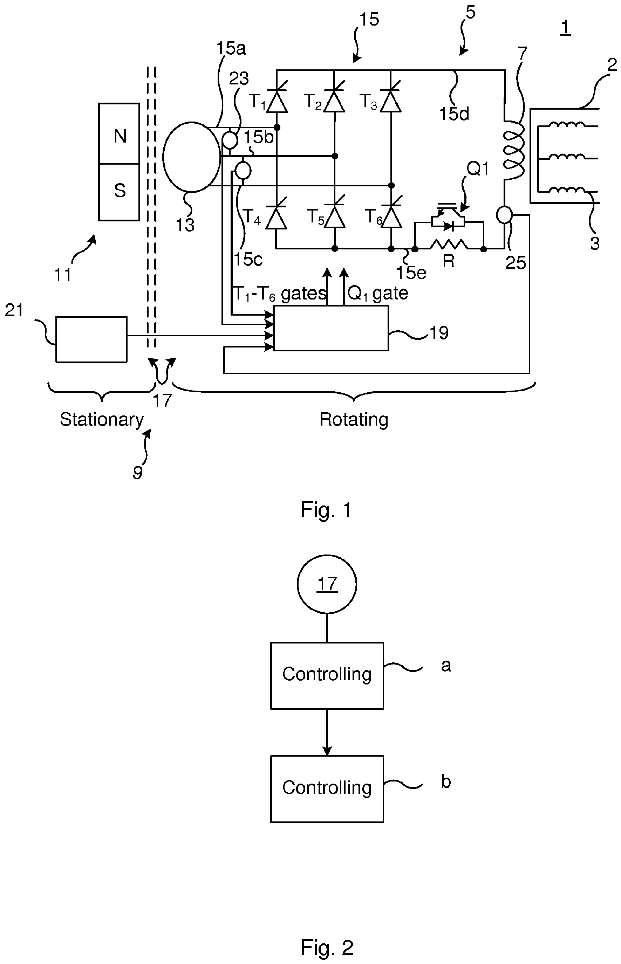

Fig. 1 depicts circuitry of an example of a brushless synchronous machine 1. The brushless synchronous machine 1 may be a generator or a motor.

The brushless synchronous machine 1 comprises a stator 2, and a rotor 5 configured to electromagnetically interact with the stator 2. To this end, the stator 1 is provided with stator windings 3 and the rotor 5 is provided with a field winding 7.

The brushless synchronous machine 1 comprises an exciter stator 11. In the depicted example, the exciter stator 11 is a permanent magnet stator. Alternatively, the exciter stator could for example be provided with exciter stator windings.

The brushless synchronous machine 1 comprises an exciter armature 13. The exciter armature 13 is provided on the rotor shaft of the rotor 5. The exciter armature 13 is configured to electromagnetically interact with the exciter stator 11.

The brushless synchronous machine 1 comprises a rectifier 15. The rectifier 15 is arranged on the rotor 5. The rectifier 15 has input terminals 15a-15c connected to the exciter armature 13. For example, the exciter armature 13 may comprise three coils, one for each electrical phase, and each input terminal 15a-15c may be connected to a respective electrical phase or coil. The rectifier 15 also comprises output terminals 15d-15e. The rectifier 15 comprises a plurality of thyristors T1-T6. The thyristors T1-T6 are arranged in a multi-phase thyristor bridge configuration. The exemplified rectifier 15 is hence a thyristor bridge rectifier.

The brushless synchronous machine 1 further comprises a field discharge resistor R and a bypass switch Q1. The field discharge resistor R and the bypass switch Q1 are arranged on the rotor 5. The electrical resistance of the field discharge resistor R is typically in the order of single-digit Ohms, however this may depend on the particular application. The field discharge resistor R is connected in series with the field winding 7. In particular, the field discharge resistor R may be connected between the field winding 7 and one of the output terminals 15d-15e of the rectifier 15. The bypass switch Q1 is connected in parallel with the field discharge resistor R. The field winding 7 is hence connected to the output terminals 15d-15e of the rectifier 15 via the field discharge resistor R/bypass switch Q1. The bypass switch Q1 is configured to be switched between a closed state or conducting state, and an open state or non-conducting state. The bypass switch Q1 may for example be a transistor such as an IGBT.

The brushless synchronous machine 1 comprises a control system 17. The control system 17 is configured to control the bypass switch Q1. The control system 17 is configured to control the thyristors T1-T6. The control system 17 comprises a storage medium including computer code, and processing circuitry, wherein the control system 17 is configured to perform the steps of a method of performing de-excitation of the brushless synchronous machine 1 as disclosed herein, when the computer program is executed by the processing circuitry.

The control system 17 comprises a controller 19. The exemplified controller is 19 arranged on the rotor 5. The controller 19 is configured to obtain set-point values from a stationary automatic voltage regulator (AVR) 21, which may also form part of the control system 17. The set-points may represent the reference field winding current. The controller 19 is hence configured for wireless communication. The controller 19 is configured to control the gate voltage to the thyristors T1-T6 based on the set-point values. The control system 17 is thereby able to fire the thyristors T1-T6, selectively causing the thyristors T1-T6 to conduct. The controller 19 is configured to control the gate voltage to the bypass switch Q1 to set the bypass switch Q1 in the open state or in the closed state. Hereto, brushless synchronous machine 1 may comprise a gate control unit (not shown) configured to be controlled by the controller 19 and configured to control the gate voltages to the thyristors TiT6 and to the bypass switch Q1. The gate control unit may be integrated with the controller 19, or it may be a separate unit.

The excitation system 9 may comprise voltage sensors 23 configured to measure the phase-to-phase voltages between the input terminals 15a-15c of the rectifier 15. The excitation system 9 may comprise a current sensor 25 configured to measure the field winding current, i.e. the current flowing through the field winding 7. The voltage sensors 23 may be configured to supply the controller 19 with voltage measurements. The current sensor 25 may be configured to supply the controller with current measurements. The control of the gate voltages to the thyristors T1-T6 and/or to the bypass switch Q1 may further be based on the voltage measurements and/or the current measurements, for example based on the difference between the reference field winding current and the measured field winding current.

A method of performing de-excitation of the brushless exciterless synchronous machine 1 by means of the control system 17 will now be described with reference to the flowchart shown in Fig. 2.

The condition of the brushless synchronous machine 1 is constantly monitored, e.g. by means of the voltage sensors 23, the current sensor 25 and/or other sensors, to be able to determine whether a fault condition is present in the brushless synchronous machine 1.

In the event that it is determined that no fault condition in the brushless synchronous machine 1 is present, the controller 19 is configured to control the bypass switch Q1 to maintain its closed state. The field discharge resistor R is hence bypassed or shorted, and the field winding current flows through the bypass switch Q1. Furthermore, the controller 19 controls the thyristors T1-T6 to fire only during the positive half-cycle of the armature voltage waveforms present at the input terminals 15a-15c for each electrical phase. The control system 17 may hence control the firing angle α to be below 90°. This results in a positive average voltage over the output terminals 15d-15e.

The determining of whether a fault condition is present may be performed by the controller 19, by the AVR 21, or by another unit which may be comprised in the control system 17.

A fault condition of the brushless synchronous machine 1 is one which is of the character that requires fast de-excitation of the brushless synchronous machine 1 to minimise damages. Such a fault condition may for example be a stator short circuit fault in the stator 2, a field winding fault, or an external fault, which may be determined according to known methods.

In case it is determined that a fault condition is present, in a step a) the thyristors T1-T6 are controlled to fire only during a negative half-cycle of the armature voltage waveforms for each electrical phase. In particular, since control is generally performed based on cosine waveforms, this typically means that the thyristors are fired with a firing angle α in the range 90°<α<270°.

The rectifier 15 is capable of producing a negative voltage at its output terminals 15d and 15e by controlling the firing angle α to be in the range 90°<α<270°. This can be understood by observing the equation for the average DC voltage $V_{DC}$ between the output terminals 15d-15e of the rectifier 15, as shown below.

$$V_{DC} = \frac{3\sqrt{2}}{\pi} V_L \cos \alpha$$

where $V_L$ is the line voltage, which is an AC voltage.

In a step b) the bypass switch Q1 is controlled to obtain the open state from the closed state. The field winding current is as a result discharged through the field discharge resistor. Step b) is preferably performed simultaneously with step a).

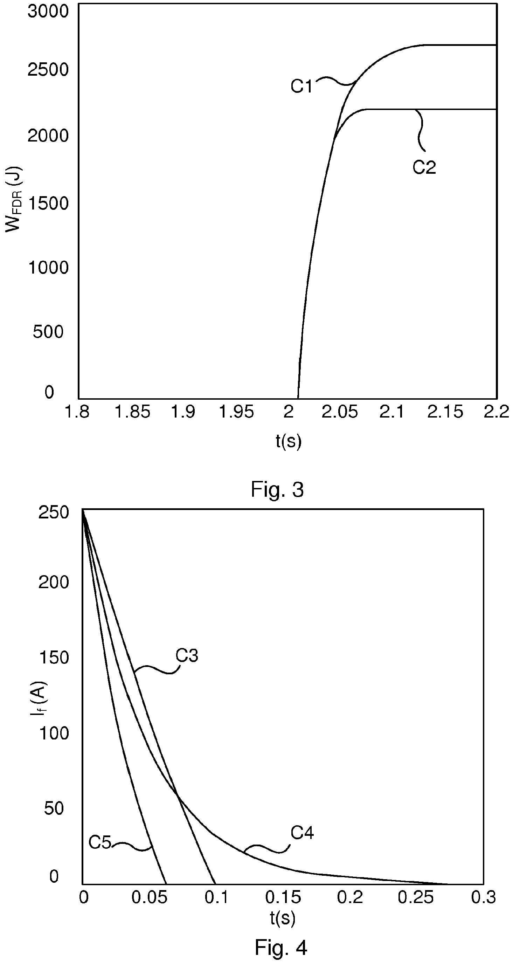

Fig. 3 shows the energy dissipated in the field discharge resistor for two different types of de-excitation techniques. The curve C1 shows the amount of energy dissipated in a field discharge resistor during de-excitation when only using the field discharge resistor, which corresponds to the case disclosed in the previously mentioned article "High-speed de-excitation system for brushless synchronous machines". The curve C2 depicts the amount of energy dissipated in the field discharge resistor R when using a negative firing angle $\alpha$ when controlling the thyristors T1-T6 combined with the field discharge resistor R according to the present concept, using the same parameters as in the case shown in the curve C1. It can be seen that there is significantly lower energy dissipation in the field discharge resistor R in the curve C2. Hence, less heat is generated in the field discharge resistor R, which allows for the design of a field discharge resistor R with a smaller footprint than has previously been possible.

Fig. 4 shows the de-excitation curves for three different types of de-excitation techniques. The curve C3 shows de-excitation where only negative cycle thyristor control is provided with the firing angle $\alpha$ being 180°, without using a discharge resistor, which except for the firing angle corresponds to the case disclosed in US4152636. The curve C4 depicts the case where only a discharge resistor is used for de-excitation, corresponding to the case disclosed in "High-speed de-excitation system for brushless synchronous machines". The curve C5 shows de-excitation according the present concept using the same parameters as in the cases shown in curves C3 and C4. As can be seen, discharging of the field winding current If is considerably faster in this case.

The inventive concept has mainly been described above with reference to a few examples. However, as is readily appreciated by a person skilled in the art, other embodiments than the ones disclosed above are equally possible within the scope of the inventive concept, as defined by the appended claims.

**Claims**

1. A method of performing de-excitation of a brushless synchronous machine (1) comprising a stator (2); and a rotor (5) including: a field winding (7), an exciter armature (13), a rectifier (15) comprising thyristors (T1-T6), the rectifier (15) having input terminals (15a-15c) connected to the exciter armature (13) and output terminals (15d-15e) connected to the field winding (7), a field discharge resistor (R) connected in series with the field winding (7), and a bypass switch (Qi) connected in parallel with the field discharge resistor (R), the bypass switch (Qi) being operable between a closed state, in which the field discharge resistor (R) is bypassed, and an open state, wherein the method comprises:

   a) controlling the thyristors (T1-T6) to fire only during a negative half-cycle of the armature voltage waveforms, and
   b) controlling the bypass switch (Qi) to obtain the open state from the closed state to thereby discharge a field winding current through the field discharge resistor (R).

2. The method as claimed in claim 1, wherein step b) is performed simultaneously with step a).

3. The method as claimed in claim 1 or 2, wherein in step a) the thyristors (T1-T6) are fired with a firing angle $\alpha$ in the range 90°<$\alpha$<270°.

4. The method as claimed in any of the preceding claims, comprising determining whether a fault condition is present in the brushless synchronous machine (1), and in case the presence of a fault condition is determined, performing steps a) and b).

5. The method as claimed in claim 4, wherein the fault condition is a stator short circuit fault.

6. The method as claimed in claim 4 or 5, comprising controlling the bypass switch (Qi) to maintain the closed state, to bypass the field discharge resistor (R), and controlling the thyristors (T1-T6) to fire only during a positive half-cycle of the armature voltage waveforms as long as no fault condition is present in the brushless synchronous machine (1).

7. The method as claimed in any of the preceding claims, wherein the bypass switch (Q1) is an IGBT.

8. The method as claimed in any of the preceding claims, wherein the rectifier (15) is a thyristor bridge rectifier.

9. A computer program comprising computer code which when executed by processing circuitry of a control system (17) for a brushless synchronous machine (1) causes the control system to perform the steps of the method as claimed in any of claims 1-8.

10. A brushless synchronous machine (1) comprising:

   a stator (2),
   a rotor (5) comprising:

      a field winding (7),
      an exciter armature (13),
      a rectifier (15) comprising thyristors (T1-T6), the rectifier (15) having input terminals (15a-15c) connected to the exciter armature (13) and output terminals (15d-15e) connected to the field winding (7),
      a field discharge resistor (R) connected in

**EP 3 595 166 A1**

series with the field winding (7), and
a bypass switch (Q1) connected in parallel
with the field discharge resistor (R); and

a control system (17) configured to perform the
method of any of claims 1-8.

11. The brushless synchronous machine (1) as claimed
in claim 10, comprising a gate control unit, wherein
the control system (17) is configured to control the
gate control unit to thereby control the firing of the
thyristors (T1-T6).

12. The brushless synchronous machine (1) as claimed
in claim 10 or 11, comprising an exciter stator (11),
wherein the exciter stator (11) is a permanent magnet stator.

13. The brushless synchronous machine (1) as claimed
in any of claims 10-12, wherein the brushless synchronous machine (1) is a generator.

Fig. 1

Fig. 2

Fig. 3

Fig. 4

Europäisches
Patentamt

European
Patent Office

Office européen
des brevets

**EUROPEAN SEARCH REPORT**

Application Number

EP 18 18 2812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2007 202286 A (TOSHIBA CORP; KEIHIN DENKI KOGYO KK) 9 August 2007 (2007-08-09) * paragraph [0014]; figure 1 * * paragraph [0011] - paragraph [0013] * | 1-13 | INV. H02P9/30 H02P9/10 H02P29/024 |
| Y | GB 1 595 650 A (ENGLISH ELECTRIC CO LTD) 12 August 1981 (1981-08-12) * column 3, line 88 - line 113; figure 3b * | 1-6,8-13 | |
| Y,D | US 4 152 636 A (GORDEN DALE I [US]) 1 May 1979 (1979-05-01) * abstract * | 1-6,8-13 | |
| Y,D | PLATERO C A ET AL: "High-speed de-excitation system for brushless synchronous machines", IET ELECTRIC POWER APPLICAT, IET, UK, vol. 6, no. 3, 8 March 2012 (2012-03-08), pages 156-161, XP006041292, ISSN: 1751-8660, DOI: 10.1049/IET-EPA.2011.0088 * figure 1 * | 7 | |

TECHNICAL FIELDS SEARCHED (IPC)

H02P

The present search report has been drawn up for all claims

| Place of search | Date of completion of the search | Examiner |
|---|---|---|
| Munich | 20 December 2018 | Schürle, Patrick |

EPO FORM 1503 03.82 (P04C01)

## ANNEX TO THE EUROPEAN SEARCH REPORT
## ON EUROPEAN PATENT APPLICATION NO.

EP 18 18 2812

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2018

| Patent document cited in search report | | Publication date | Patent family member(s) | | Publication date |
|---|---|---|---|---|---|
| JP 2007202286 | A | 09-08-2007 | NONE | | |
| GB 1595650 | A | 12-08-1981 | NONE | | |
| US 4152636 | A | 01-05-1979 | BE | 857995 A | 22-02-1978 |
| | | | CA | 1097738 A | 17-03-1981 |
| | | | CH | 620799 A5 | 15-12-1980 |
| | | | DE | 2737541 A1 | 23-02-1978 |
| | | | ES | 461765 A1 | 01-12-1978 |
| | | | FR | 2362519 A1 | 17-03-1978 |
| | | | GB | 1591330 A | 17-06-1981 |
| | | | IT | 1192190 B | 31-03-1988 |
| | | | JP | S5325814 A | 10-03-1978 |
| | | | JP | S5894903 U | 28-06-1983 |
| | | | JP | S5895200 U | 28-06-1983 |
| | | | MX | 4205 E | 27-01-1982 |
| | | | SE | 427977 B | 24-05-1983 |
| | | | US | 4152636 A | 01-05-1979 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4152636 A

**Non-patent literature cited in the description**

- **C.A. PLATERO ; M. REDONDO ; F. BLAZQUEZ ; P. FRIAS.** High-speed de-excitation system for brushless synchronous machines. *IET Electric Power Applications,* 2012, vol. 6 (3), 156-161